(19) Europäisches Patentamt
European Patent Office
Office européen des brevets

(11) Veröffentlichungsnummer: **0 001 776**
**B1**

(12) # EUROPÄISCHE PATENTSCHRIFT

(21) Anmeldenummer: **78101150.7**

(22) Anmeldetag: **14.10.78**

(51) Int. Cl.³: **C 08 L 83/04,** D 21 H 3/62

(54) **Verfahren zum Herstellen von klebrige Stoffe abweisenden Überzügen auf Basis von Polysiloxangemischen und deren Anwendung zur Papierbeschichtung**

(30) Priorität: **28.10.77 DE 2748406**

(43) Veröffentlichungstag der Anmeldung:
**16.05.79 Patentblatt 79/10**

(45) Bekanntmachung des Hinweises auf die Patenterteilung:
**01.10.80 Patentblatt 80/20**

(84) Benannte Vertragsstaaten:
**BE CH DE FR GB NL SE**

(56) Entgegenhaltungen:
**DE - A - 2 237 551**
**FR - A - 2 133 888**

(73) Patentinhaber: **BAYER AG**
**Zentralbereich Patente, Marken und Lizenzen**
**D - 5090 Leverkusen 1, Bayerwerk (DE)**

(72) Erfinder: **de Montigny, Armand, Dr.**
**Walter-Flex-Strasse 17**
**D - 5090 Leverkusen 1 (DE)**
**Toepsch, Hans, Dr.**
**Am Wasserturm 20**
**D - 5090 Leverkusen 3 (DE)**

**EP 0 001 776 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zum Herstellen von klebrige Stoffe abweisenden Überzügen auf Basis von Polysiloxangemischen und deren Anwendung zur Papierbeschichtung

Die vorliegende Erfindung betrifft ein Verfahren zur haftungsmindernden Ausrüstung von dünnschichtigen Substraten mittels Organopolysiloxanbeschichtungen.

Es ist bekannt, daß man Oberflächen von Papier oder anderen festen Stoffen mit Organopolysiloxanen überziehen kann, um zu verhindern, daß klebrige Stoffe an diesen Oberflächen fest haften (vgl. z.B. W. Noll, "Chemie und Technologie der Silicone", Weinheim 1968, Seite 520/521 und britische Patentschrift 11 11 156).

An die Verfahren zum Herstellen von klebrige Stoffe abweisenden Überzügen auf Basis Polysiloxan werden jedoch immer höhere Ansprüche gestellt. Es werden Beschichtungs-Verfahren gefordert, die imstande sind, bei kürzesten Verweilzeiten- d.h. hohen Maschinengeschwindigkeiten — zu völlig ausgehärteten Überzügen zu führen, ohne daß diese Eigenschaften durch sonstige Nachteile erkauft werden. So darf eine extrem kurze Aushärtezeit im Trockenkanal nicht dazu führen, daß gleichzeitig die geforderte Verweilzeit im Auftragsystem, die bei Raumtemperatur mindestens 8 Stunden betragen soll, drastisch gekürzt wird. Es wäre daher wünschenswert, wenn bei Betriebstemperaturen sehr schnell reagierende Beschichtungssysteme, bei Raumtemperatur eine Verarbeitungszeit von wesentlich mehr als 8 Stunden aufweisen würden. Ideal wäre, wenn die Verarbeitungszeit nur durch das Verdampfen des vorhandenen Lösungsmittels beschränkt würde und nicht durch das Vergelen oder gegebenenfalls durch eine Inaktivierung der Mischung.

In der Vergangenheit sind zwar eine Reihe von Verfahren bekannt geworden, die jedoch alle noch weit von diesen Idealvorstellungen entfernt sind. Neuerdings wird z.B. in DT—AS 2 119 120 ein Verfahren beschrieben, das bei kurzen Aushärtungszeiten eine sogenannte Topfzeit von 8 Stunden aufweist (Beispiel 12). Wird eine leichte Schmierigkeit der Beschichtung in Kauf genommen, so kann lt. zitiertem Beispiel eine Topfzeit von 24 Stunden angenommen werden.

Das erfindungsgemäße Verfahren bietet nun den Vorteil einer höheren Aushärtungsgeschwindigkeit (ca. 30%, vgl. Beispiel 2 und 3) bei wesentlich längeren Topfzeiten und bei besserer Zugänglichkeit der diesen Effekt hervorrufenden Zusatzmittel.

Die vorliegende Erfindung beinhaltet ein Verfahren zum Herstellen haftmindernder Beschichtungen durch Auftragen eines an sich bekannten lösungsmittelhaltigen Gemisches, bestehend aus

(A) 100 Gewichtsteilen eines $\alpha,\omega$-Dihydroxypolydimethylsiloxans einer Viskosität zwischen $10^5$ und $5.10^7$ mPa.s bei 20°C.

(B) 1 bis 20, vorzugsweise 3 bis 8 Gewichtsteilen eines mit Trimethylsiloxygruppen endblockierten Si-gebundenen Wasserstoff aufweisenden Polyorganosiloxans mit 10 bis 40 $CH_3Si(H)O$-Einheiten.

(C) 1 bis 20, vorzugsweise 3 bis 8 Gewichtsteilen eines Schwermetallcarboxylates oder Dialkylzinncarboxylates insbesondere Dibutylzinndiacetat, als Vernetzungsbeschleuniger und

(D) einer N-haltigen Siloxanverbindung

das dadurch gekennzeichnet ist, daß dem Gemisch vor der Aushärtung bei höherer Temperatur als Komponente

(D) 0,5 bis 10, vorzugsweise 1 bis 5 Gewichtsteile eines Disilamorpholinsiloxans zugesetzt werden, das durch Umsetzung eines Chlormethylpolymethylsiloxans der Formel

$$ClCH_2(CH_3)_2SiO[Si(CH_3)CH_2Cl\ O]_nSi(CH_3)_2CH_2Cl$$

in der n einen Wert zwischen 2 und 200 bedeutet, mit maximal äquivalenten Mengen eines primären Amins $H_2NR$ wobei R für einen 4 bis zu 18 C-Atomen zählenden Alkyl bzw. Alkenylrest oder einen Cycloalkylrest steht, in Gegenwart eines Protonenfängers erhalten wird.

Die im Rahmen der vorliegenden Erfindung einzusetzenden $\alpha,\omega$-Dihydroxypolydimethylsiloxane (A) sind an sich bekannte Produkte. Sie werden laufend in Verfahren zur Herstellung haftmindernder Überzüge eingesetzt. Ihre Viskosität kann gegebenenfalls durch Abmischen innerhalb der beanspruchten Grenzen eingestellt werden. Ähnliches gilt für das Si-Wasserstoff-Gruppierungen enthaltende Polyorganosiloxan. Die in dem vorliegenden Verfahren verwendeten Si-H-haltigen Substanzen werden durch folgende Formel beschrieben:

$$(CH_3)_3SiO[H(CH_3)SiO]_mSi(CH_3)_3$$

wobei m einen Wert zwischen 10 und 40 bedeutet.

Zur Katalysierung der Vernetzungsreaktion werden ebenfalls bekannte Verbindungen (C) wie Dibutylzinndiacetat, Dibutylzinndilaurat, Dioctylzinnmaleinat usw. verwendet.

Die erfindungsgemäß verwendeten (D) Disilamorpholinsiloxane stellen eine bisher für Beschichtungsverfahren unbekannte Verbindungsklasse dar. Sie lassen sich wirtschaftlich aus großtechnisch zugänglichen Ausgangssubstanzen herstellen. Die einfach durchzuführende Herstellung erfolgt — in

Gegenwart eines organischen Lösungsmittels — durch Umsetzung eines Polychlormethylorganosiloxans der Formel

$$ClCH_2(CH_3)_2Si[OSi(CH_3)CH_2Cl]_nOSi(CH_3)_2CH_2Cl$$

wobei n einen Wert von 2 bis etwa 200, bevorzugt zwischen 4 und 100 bedeutet, mit maximal äquivalenten Mengen eines primären Amins.

Die Festlegung des Indexes n auf den Wert 4 als Mindestgrenze hat zur Folge, daß die Dampfdrücke der entsprechenden Umsetzungsprodukte die Verwendung in modernen Beschichtungsmaschinen mit Aushärtungstemperaturen von mehr als 180°C mit Sicherheit zulassen. Wird ein Einsatz bei niedrigeren Temperaturen erwogen, so wären auch Werte für n kleiner als 4, z.B. von 2 bis 200 durchweg denkbar.

Die Umsetzung mit maximal äquivalenten Mengen eines primären Amins in organischen Lösungsmitteln und in Gegenwart eines Protonenfängers führt zu Produkten mit Disilamorpholin-Einheiten der Formel:

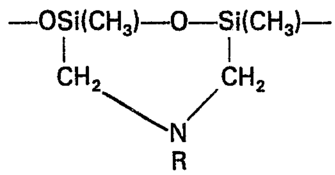

wobei

R die genannte Bedeutung besitzt.

Werden weniger als äquivalente Mengen Amin umgesetzt, so sind ebenfalls noch unumgesetzte Chlormethylmethylsiloxy-Einheiten vorhanden. Es sollen jedoch mindestens 20% der vorhandenden Chlormethylgruppen umgesetzt werden. Bei der Umsetzung werden bevorzugt Chlormethylpolymethylsiloxane eingesetzt, bei denen mindestens 30 bis 80% der Chlormethylgruppen reagiert haben, als Rest R wird der Cyclohexylrest bevorzugt.

In Frage kommende primäre Amine sind z.B.: Butylamine, Hexylamin, Cyclohexylamin, 2-Äthylhexylamin, Allylamin.

Ihre Auswahl wird weniger nach chemischen Gesichtspunkten als nach Wirtschaftlichkeit, Zugänglichkeit und Möglichkeiten bequemer Handhabung getroffen.

Das erfindungsgemäße Verfahren ist einfach zu handhaben und besitzt bei einer sehr hohen Aushärtungsgeschwindigkeit eine Topfzeit, die zum Teil durch Verdampfen des Lösungsmittels bestimmt wird. Sie beträgt ein Vielfaches der unbedingt benötigten Zeit von etwa 8 Stunden, so daß Beschichtungsvorgänge durchweg über längere Zeiten unterbrochen werden können, ohne daß später die Qualität des ausgehärteten Überzugs gemindert wird. Ist zum Beispiel nach längerer Zeit (mehr als 50 Stunden) die Mischung infolge der Verdunstung von Lösungsmittel zu viskos für eine einwandfreie Verarbeitung geworden, so ist eine Verdünnung mit Lösungsmittel auf die ursprüngliche Konzentration durchaus möglich, ohne daß das Produkt in seiner Wirkung beeinträchtigt wird.

Die Herstellung des Disilamorpholinsiloxans erfolgt z.B. auf folgende Art und Weise:

Chlormethyldimethylchlorsilan sowie Chlormethylmethyldichlorsilan werden gemeinsam hydrolysiert, sauer äquilibriert, gegebenenfalls neutralisiert, getrocknet und ausgeheizt.

Das Chlormethylsiloxan wird mit soviel Lösungsmittel, wie z.B. Toluol, versetzt, daß eine etwa 15%ige Lösung an Siloxan resultiert. Hierzu wird langsam bei 60°C eine Lösung, bestehend aus äquivalenten Mengen eines primären Amins (z.B. Cyclohexylamin) und dem vierfachen Überschuß von z.B. Triäthylamin, zugesetzt. Es wird 2 Stunden bei 60 bis 70°C gerührt, abgekühlt und filtriert. Die klare bräunliche Lösung wird eingeengt bis eine etwa 30%ige Lösung an Siloxan anfällt. Ist der Rückstand trüb geworden, so wird ein zweites Mal filtriert. Die "Disilamorpholin"-Struktur wird durch die Stickstoffwerte des "tertiären Stickstoffs" und durch die IR-Spektroskopie belegt.

Das erfindungsgemäße Verfahren soll nun anhand der folgenden Beispiele noch näher erläutert werden (%-Angaben beziehen sich auf Gew.-%).

## Beispiele

### Beispiel A

a) Herstellung von 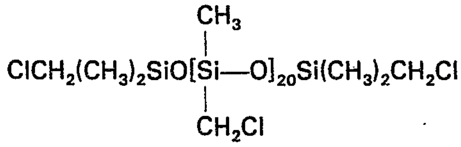

Ein Gemisch von 129 g [0,9 Mol] $ClCH_2(CH_3)_2SiCl$ und 1471 g [9 Mol] $ClCH_2(CH_3)SiCl_2$ wird unter Rühren in 3600 g $H_2O$ gegeben, wobei darauf zu achten ist, daß die Temperatur nicht wesentlich über 30°C hinaussteigt. Nach vollendeter Zugabe wird noch eine Stunde gerührt. Die wäßrige Phase wird vom Hydrolysat getrennt und verworfen.

Die Siloxanphase wird getrocknet und anschließend 5 Stunden bei 150°C äquilibriert (3% Bleicherde).

Ausbeute: 894 g
$n_D^{20}$: 1.4689
Cl-%: 32,6%

b) Herstellung des Disilamorpholinsiloxans

432 g des obigen Chlormethylsiloxans [3.97 g-Äquivalent-Chlor] werden mit 1800 g getrocknetem Toluol vermischt und auf 60°C aufgeheizt. Zu dieser Lösung wird innerhalb von 120 Minuten ein Gemisch aus 1212 g Triäthylamin [12,00 Mol] 196,4 g Cyclohexylamin [1,984 Mol] und 1200 g Toluol zugetropft. Nach vollendeter Zugabe wird 2 Studen bei 60°C gerührt, gekühlt und abfiltriert. Anschließend wird das Filtrat bis 110°C eingeengt, sodaß eine ca. 28—30%ige toluolische Lösung entsteht. Nachdem abgekühlt wurde, wird über ein Filtrierhilfsmittel filtriert.

Ausbeute: 1600 g einer ca. 28%igen toluolischen Siloxanlösung.

Die N-Analyse des vom Lösungsmittel befreiten Produktes weist folgende Werte auf:

| | |
|---|---|
| % Basen N: | 3,08 |
| % prim. N: | 0,01 |
| % sek. N: | 0,26 |
| % tert. N: | 2,82 |

In den folgenden Beispielen wurde jeweils die 28%ige Lösung eingesetzt.

## Beispiel 1

50 g eines $\alpha,\omega$-Polymethylsiloxandiols mit einer Viskosität von ca. $10^6$ cP bei 20°C werden in 800 g Toluol gelöst und nacheinander mit 3,75 g eines Si-Wasserstoff enthaltenden Siloxans mit Trimethylsiloxyendgruppen und 30 $CH_3Si(H)$-Einheiten, sowie mit 4 g Dibutylzinndiacetat und 2,15 g der oben beschriebenen Disilamorpholinsiloxan-Lösung versetzt.

Die Härtung wurde in einem Trockenofen ohne interne Luftzirkulation bei 150°C durchgeführt. Es wurde jeweils ein Rakel Nr. 20 benutzt. Das Substrat bestand aus einem Kraft-Papier mit 75 g/m². Die Beurteilung wurde 15 Sekunden nachdem das beschichtete Papier den Trockenofen verlassen hatte (Abkühlung) durch kräftigstes Reiben mit der Fingerkuppe durchgeführt. Treten bei diesem Vorgang geringste Spuren auf, so erfolgt eine negative Beurteilung. Die Härtungs-temperatur betrug 150°C.

| Zeit zwischen Ansatz und Auftrag der Lsg. | Härtungszeit | Beurteilung |
|---|---|---|
| 0 Std. | 7 sek. | + |
| 1 Std. | 7 sek. | + |
| 2 Std. | 7 sek. | + |
| 3 Std. | 7 sek. | + |
| 4 Std. | 7 sek. | + |
| 5 Std. | 7 sek. | + |
| 8 Std. | 7 sek. | + |

## Beispiel 2

Ein Ansatz, gekennzeichnet als Nr. 2 nach Beispiel 1, mit der Ausnahme, daß nur 3 g Dibutylzinndiacetat auf 50 g $\alpha,\omega$-Polymethyldisiloxan eingesetzt wurden, wurde vergleichsweise mit 2 Ansätzen nach dem Verfahren nach DT—AS 2 119 120 geprüft. Die drei Ansätze unterschieden sich dadurch, daß ein Ansatz nach DT—AS 2 119 120 (wird als Versuch 2 a bezeichnet) anstatt des Silamorpholinsiloxans ein Mischpolymerisat enthält, das gemäß den Angaben der Spalte 5, Zeile 5—40 aus 5 Gew.-Teilen $(CH_3)_3$—$SiO[CH_3Si(H)O]_{30}Si(CH_3)_3$ 1 Teil $H_2N$—$(CH_2)_3Si(OC_2H_5)_3$ und 1 Mol $H_2O$ pro Mol Amino-

propylsilan hergestellt worden war. Ein weiterer Ansatz, gekennzeichnet als 2 b, enthielt als aminische Komponente das gemäß Spalte 4, Zeile 16—34, hergestellte Umsetzungsprodukt aus 10 Gew.-Teilen eines Si-gebundenen Hydroxylgruppen aufweisenden Polymethylsiloxans mit ca. 7 $(CH_3)_2SiO$-Einheiten und 1 Gew.-Teil $H_2N(CH_2)_3$-$Si(OC_2H_5)_3$. Die den Ansätzen zugesetzten Mengen entsprachen jeweils den Angaben des Beispiels 1 der DT—AS 2 119 120. Die Prüfbedingungen waren, wenn nicht anders vermerkt, die gleichen wie im Beispiel 1.

| Zeit A | Zeit B | Versuch 2 | Nr. 2a | Nr. 2b |
|---|---|---|---|---|
| 0 | 7 | + | + | + |
| 1 | 7 | + | + | + |
| | 10 | | | |
| 2 | 7 | + | + | — |
| | 10 | | | + |
| 3 | 7 | + | + | — |
| | 10 | | | + |
| 4 | 7 | + | + | — |
| | 10 | | | + |
| 5 | 7 | + | + | — |
| | 10 | | | + |
| 6 | 7 | + | + | — |
| | 10 | | | + |
| 7 | 7 | + | + | — |
| | 10 | | | + |
| 8 | 7 | + | — | — |
| | 10 | | + | + |

Zeit A in Stunden: Zeit zwischen dem Ansatz und dem Auftrag
Zeit B in Sekunden: Aushärtungszeit
Rakel: Nr. 40

## Beispiel 3

Eine Mischung, wie in Beispiel 2 (Versuch 2) beschrieben, wurde auf ihre Topfzeit geprüft.

Das Produkt wurde in einem offenen Becherglas — ohne daß gerührt wurde — der Atmosphäre bei Raumtemperatur ausgesetzt. Die mittlere relative Luftfeuchtigkeit betrug 53%.

Es wurde wie in Beispiel 1 geprüft.

| Zeit A | Zeit B | Ergebnis |
|---|---|---|
| Std. | sek. | |
| 0 | 7 | + |
| 4 1/2 | 7 | + |
| 20 | 7 | + |
| 72 | 10 | + |
| 72* | 10* | +* |
| (nach 7 Tagen* | 10* | +*) |

Nach 40 Stunden verdickte jedoch die Lösung etwas, ohne daß jedoch mit dem Rakel infolge der angestiegenen Viskosität Beschichtungsschwierigkeiten auftraten. In einem weiteren Versuch wurde eine solche Lösung, bei der die Verdickung offensichtlich nur durch das Verdampfen des Lösungsmittels erfolgte, wieder bis zur ursprünglichen Markierung mit Lösungsmittel aufgefüllt. Dieser Versuch wurde mit einem Stern markiert.

Nicht bewegte Lösungen vermögen eine Topfzeit von 7 Tagen zu erzielen.

Beispiel 4

Eine Mischung nach Beispiel 2 wurde zur Papierbeschichtung auf der Maschine eingesetzt. Im Trockenkanal (3 m) stand eine Temperatur von 110°C zur Verfügung. Die Aushärtung erfolgte bei einer Verweilzeit des Papiers im Trockenkanal von:

A = 60 Sek
B = 30 Sek
C = 15 Sek
D = 7,5 Sek

Bis zu einer Verweilzeit von 15 Sek war der Siliconfilm nach Verlassen des Trockenkanals und Passieren einer Kühlwalze völlig ausgehärtet, so daß der "Fingerstrich — Test" keine Spuren auf dem Film hinterließ. Bei einer Verweilzeit von 7,5 Sek (D) zeigte der "Fingerstrich — Test" nach einer Zwischenlagerung von 10 Minuten eine spurenfreie Oberfläche.

Die Trennwerte mit Tesaband 659 (Hersteller Fa. Beiersdorf AG) lagen bei Versuch A und B bei 4.2 g/cm, bei Versuch C bei 9,6 g/cm Streifenbreite und bei Versuch D bei 8,4 g/cm Streifenbreite.

Die Klebkraftminderung, gemessen am gleichen Band, lag bei allen Versuchsbedingungen unterhalb 10%.

**Patentansprüche**

1. Verfahren zum Herstellen haftmindernder Beschichtungen auf dünnschichtigen Substraten durch Auftragen eines lösungsmittelhaltigen Gemisches, bestehend aus

(A) 100 Gewichtsteilen eines $\alpha,\omega$-Dihydroxypolydimethylsiloxans einer Viskosität zwischen $10^5$ und $5 \cdot 10^7$ mPa·s bei 20°C,
(B) 1 bis 20 Gewichtsteilen eines mit Trimethylsiloxygruppen endblockierten Si-gebundenen Wasserstoff aufweisenden Polyorganosiloxans mit 10 bis 40 $CH_3Si(H)O$-Einheiten,
(C) 1 bis 20 Gewichtsteilen eines Schwermetallcarboxylates oder Dialkylzinncarboxylates und
(D) einer N-haltigen Siloxanverbindung,

dadurch gekennzeichnet, daß dem Gemisch vor der Aushärtung bei höherer Temperatur als Komponente

(D) 0,5 bis 10 Gewichtsteile eines Disilamorpholinsiloxans zugesetzt werden, das durch Umsetzung eines Chlormethylpolymethylsiloxans der Formel

$$ClCH_2(CH_3)_2SiO[Si(CH_3)CH_2ClO]_n\ Si(CH_3)_2CH_2Cl$$

in der n einen Wert zwischen 2 und 200 bedeutet, mit maximal äquivalenten Mengen eines primären Amins, dessen organischer Teil aus einem 4 bis zu 18 C-Atomen zählenden Alkyl- bzw. Alkenylrest oder einem Cycloalkylrest besteht, in Gegenwart eines Protonenfängers erhalten wird.

2. Verfahren nach Anspruch 1, dadurch gekennzeichnet, daß der Index n des Ausgangsproduktes für das Disilamorpholinsiloxan (D) eine Zahl zwischen 4 und 100, vorzugsweise zwischen 15 und 25 bedeutet.

3. Verfahren nach einem der Ansprüche 1—2, dadurch gekennzeichnet, daß das Amin zur Herstellung des Disilamorpholinsiloxans (D) Cyclohexylamin ist.

4. Verfahren nach einem der Ansprüche 1—3, dadurch gekennzeichnet, daß das Disilamorpholinsiloxan (D) in Mengen von 1 bis 5 Gew.-Teilen eingesetzt wird.

5. Verfahren nach einem der Ansprüche 1—4, dadurch gekennzeichnet, daß Papier als dünnschichtiges Substrat verwendet wird.

**Revendications**

1. Procédé de formation d'enduits réduisant l'adhérence sur des substrats en couches minces par application d'un mélange contenant des solvants et constitué de:

(A) 100 parties en poids d'un $\alpha,\omega$-dihydroxypolydiméthylsiloxane d'une viscosité comprise entre $10^5$ et $5.10^7$ mPa.s à 20°C,
(B) 1 à 20 parties en poids d'un polyorganosiloxane contenant de l'hydrogène lié à du Si et à terminaisons bloquées par des groupes triméthylsiloxy avec 10 à 40 motifs $CH_3Si(H)O$,

(C) 1 à 20 parties en poids d'un carboxylate d'un métal lourd ou d'un carboxylate d'étain-dialkyle, et
(D) un composé siloxane azoté,

caractérisé en ce que, avant le durcissement, à une température supérieure, on ajoute, au mélange, comme composant (D), 0,5 à 10 parties en poids d'un disilamorpholinosiloxane que l'on obtient par réaction d'un chlorométhylpolyméthylsiloxane de formule:

$$ClCH_2(CH_3)_2SiO[Si(CH_3)CH_2ClO]_nSi(CH_3)_2CH_2Cl$$

dans laquelle n a une valeur comprise entre 2 et 200, avec, au maximum, des quantités équivalentes d'une amine primaire dont la fraction organique est constituée d'un groupe alcényle ou d'un groupe alkyle contenant 4 à 18 atomes de carbone ou encore d'un groupe cycloalkyle, en présence d'un accepteur de protons.

2. Procédé suivant la revendication 1, caractérisé en ce que l'indice n du produit de départ pour le disilamorpholinosiloxane (D) représente un nombre compris entre 4 et 100, de préférence, entre 15 et 25.

3. Procédé suivant l'une quelconque des revendications 1 et 2, caractérisé en ce que l'amine intervenant pour la préparation due disilamorpholinosiloxane (D) est la cyclohexylamine.

4. Procédé suivant l'une quelconque des revendications 1 à 3, caractérisé en ce qu'on utilise le disilamorpholinosiloxane (D) en quantités de l à 5 parties en poids.

5. Procédé suivant l'une quelconque des revendications 1 à 4, caractérisé en ce qu'on utilise le papier comme substrat en couche mince.

**Claims**

1. Process for the production of adhesion-reducing coatings on thin-layer substrates by application of a solvent-containing mixture consisting of

(A) 100 parts by weight of an $\alpha,\omega$-dihydroxypolydimethylsiloxane with a viscosity between $10^5$ and $5 \cdot 10^7$ mPa.s at 20°C,
(B) 1 to 20 parts by weight of a polyorganosiloxane which contains trimethylsiloxy end groups and Si-bonded hydrogen and has 10 to 40 $CH_3Si(H)O$-units,
(C) 1 to 20 parts by weight of a heavy metal carboxylate or dialkyl-tin carboxylate and
(D) a N-containing siloxane compound,

characterised in that, before hardening the mixture at a relatively high temperature, 0.5 to 10 parts by weight of a disilamorpholinosiloxane which is obtained by reacting a chloromethylpolymethylsiloxane of the formula

$$ClCH_2(CH_3)_2SiO[Si(CH_3)CH_2ClO]_nSi(CH_3)_2CH_2Cl$$

in which

n denotes a value between 2 and 200, with at most equivalent amounts of a primary amine, the organic part of which consists of an alkyl or alkenyl radical having from 4 up to 18 C atoms or a cycloalkyl radical, in the presence of a proton acceptor, are added as component (D).

2. Process according to Claim 1, characterised in that the index n of the starting material for the disilamorpholinosiloxane (D) denotes a number between 4 and 100, preferably between 15 and 25.

3. Process according to one of Claims 1—2, characterised in that the amine for the preparation of the disilamorpholinosiloxane (D) is cyclohexylamine.

4. Process according to one of Claims 1—3, characterised in that the disilamorpholinosiloxane (D) is employed in amounts of 1 to 5 parts by weight.

5. Process according to one of Claims 1—4, characterised in that paper is used as the thin-layer substrate.